# EUROPEAN PATENT APPLICATION

(11) **EP 3 521 959 A1**
(43) Date of publication of application: **07.08.2019**
(21) Application number: 18154832.2
(22) Date of filing: 02.02.2018
(51) Int. Cl.: G05B 23/02

(54) **IMPROVED BROADCASTING SYSTEM AND METHOD**

(71) Applicant: Agidens Process Automation NV, 2070 Zwijndrecht (BE)
(72) Inventor: PLUVIER, Kevin, 2070 Zwijndrecht (BE)
(74) Representative: Brantsandpatents bvba

(57) **Abstract**

The current invention concerns a system and method for automatically informing operators in the field of process alerts, the system comprising: a set of process measurement systems; a central control system, and a wireless broadcast system comprising a central transceiver and a number of carry-on transceiver devices, wherein the set of process measurement systems is configured to transmit process data regarding one or more process parameters to the central control system, wherein the central control system is configured to produce a set of process alerts on the basis of said process data and a pre-defined set of process rules, wherein the central control system comprises a text-to-speech module for converting said set of process alerts to one or more voice messages, wherein the central control system is connected to the central transceiver and is configured to transmit said voice messages to an audio input of said central transceiver, and wherein the central transceiver is configured to wirelessly broadcast said voice messages to said set of carry-on transceiver devices.

## Description

### Technical field

The invention pertains to the technical field of process monitoring and process control, typically for one or more processes performed on an extended process plant site, and typically wherein the one or more processes are performed on a multitude of installations. The current invention is particularly suitable to be used for Seveso sites.

### Background

Large-scale and/or intricate processes can be typically performed on a plant site with a multitude of installations. For instance, oil, natural gas, chemical and petrochemical companies typically perform necessary process operations such as refinery, contaminant removal, liquefaction, oxidation/reduction, hydration, polymerization, etc. on a site containing a large number of interconnected installations such as storage tanks, reactor tanks, pipelines, etc. Hereby, all these installations need to be operated within certain parameter ranges, whereby in many cases the parameter ranges of the different installations depend upon each other. In some cases, it is critical to take all necessary measures to prevent major accidents and to limit their consequences for human health and the environment. In this respect, the European Union has adopted the Seveso-III-Directive (2012/18/EU), which covers establishments ("Seveso" companies or "Seveso" sites) where dangerous substances may be present, e.g. during processing or storage, in quantities exceeding certain threshold.

Consequently, processes and plants in which dangerous substances are present, need to be monitored and/or controlled in a centralized manner, e.g. from a central control room. Hereby, data regarding the status of the different installations and/or the processes performed in the different installations are acquired by sensors which can be specifically developed for the individual installations and processes performed therein. The acquired data are then transmitted to the central control room, where they can be monitored. The control room typically operates on the basis of a set of procedures which may allow at least to:
- determine if process parameters are within allowed ranges;
- determine or predict evolution of process parameters to see if these remain within allowed ranges;
- warn an operator if process parameters are out of the allowed ranges or are predicted to move out of these allowed ranges, and/or suggest which action to take.

A particularly useful control system for large-scale and/or intricate processes and process plants, is SCADA ("Supervisory Control And Data Acquisition"), which is a control system architecture that uses computers, networked data communications and graphical user interfaces for high-level process supervisory management, but uses other peripheral devices such as programmable logic controllers and discrete PID controllers to interface to the process plant or machinery. The operator interfaces which enable monitoring and the issuing of process commands, such as controller set point changes, are handled through the SCADA supervisory computer system. However, the real-time control logic or controller calculations are performed by networked modules which connect to the field sensors and actuators. The SCADA concept was developed as a universal means of remote access to a variety of local control modules, which could be from different manufacturers allowing access through standard automation protocols. In practice, large SCADA systems have grown to become very similar to distributed control systems in function, but using multiple means of interfacing with the plant. They can control large-scale processes that can include multiple sites, and work over large distances. It is one of the most commonly-used types of industrial control systems.

A distributed control system (DCS) is a computerised control system for a process or plant usually with a large number of control loops, in which autonomous controllers are distributed throughout the system, but there is central operator supervisory control. This is in contrast to non-distributed control systems that use centralised controllers; either discrete controllers located at a central control room or within a central computer. The DCS concept increases reliability and reduces installation costs by localising control functions near the process plant, with remote monitoring and supervision. Distributed control systems first emerged in large, high value, safety critical process industries, and were attractive because the DCS manufacturer would supply both the local control level and central supervisory equipment as an integrated package, thus reducing design integration risk. Today the functionality of SCADA and DCS systems are very similar, but DCS tends to be used on large continuous process plants where high reliability and security is important, and the control room is not geographically remote.

An important part of monitoring and/or control systems is alarm handling. The system monitors whether certain alarm conditions are satisfied, to determine when an alarm event has occurred. Once an alarm event has been detected, one or more actions are taken (such as the activation of one or more alarm indicators, and perhaps the generation of email or text messages so that management or operators in the field are informed). In many cases, a human operator may have to acknowledge the alarm event; this may deactivate some alarm indicators, whereas other indicators remain active until the alarm conditions are cleared. Examples of alarm indicators include a siren, a pop-up box on a screen, or a coloured or flashing area on a screen (that might act in a similar way to the "fuel tank empty" light in a car); in each case, the role of the alarm indicator is to draw the control room operator's attention to the part of the system 'in alarm' so that appropriate action can be taken. In many cases, the appropriate action herein involves contacting an operator in the field to go and check the installation in person. This field operator can be alerted by a control room operator who contacts the field operator via a communication system. However, in the above system, the alerts from the control system (such as a SCADA or DCS system) are typically only visible to the control room operator, thereby presenting a number of disadvantages, such as:
- the control room must be appropriately staffed to ensure that all alerts are properly communicated and/or responded to;
- there is a delay between the detection of an alarm event in the control room and the communication to the field operators;
- there is the possibility of human communication error between the control room operator and the field operators;
- there can be overlap between communications of multiple control room operators.

Chinese utility model CN 2879301 Y relates to a distributed voice alarm system for real-time transmitting alarm information or monitoring information to any receiving terminal by radio communication module and generating speech information by speech synthesis module of a dedicated receiving terminal. Hereby, a digital message is sent to a particular receiving terminal, which is specially adapted to allow receipt of the message and communication of the message to the field operator. The system of CN 2879301 Y cannot be readily implemented in existing installations, as it requires dedicated receiving terminals. The system is also not easily scalable and upgradable. Furthermore, the system is not adapted for use on sites for which security guidelines stipulate that only specific wireless transmission systems may be used, typically excluding use of GSM networks. For instance, many Seveso sites do not allow use of a GSM network, and need to rely on other types of wireless communication such as radio communication with handheld transceivers (Walkie-Talkie's).

There remains a need in the art for an automated control system which overcomes the abovementioned drawbacks.

The invention thereto aims to provide an automated control system which allows fast and reliable communication of process alerts and parameters via a central control room, which can be implemented in existing plant control systems in without endangering breaking of security guidelines, and which is easily upgradable and scalable.

### Summary of the invention

The present invention provides a system and method for automatically informing operators in the field of process alerts. The system of the present invention thereto comprises:
- a set of process measurement systems;
- a central control system, and
- a wireless broadcast system comprising a central transceiver and a number of carry-on transceiver devices,
wherein the set of process measurement systems is configured to transmit process data regarding one or more process parameters to the central control system, wherein the central control system is configured to produce a set of process alerts on the basis of said process data and a pre-defined set of process rules,
wherein the central control system comprises voice message generation means, preferably a text-to-speech module, for converting said set of process alerts to one or more voice messages,
wherein the central control system is connected to the central transceiver and is configured to transmit said voice messages to an audio input of said central transceiver,

wherein the central transceiver is configured to wirelessly broadcast said voice messages to said set of carry-on transceiver devices.

In accordance with the present invention, the method for automatically informing operators in the field of process alerts, comprises the steps of:
a) obtaining process data regarding one or more process parameters;
b) producing a set of process alerts on the basis of said process data and a pre-defined set of process rules;
c) converting said set of process alerts to one or more voice messages, preferably using a text-to-speech module;
d) transmitting said voice messages to an audio input of a central transceiver, and
e) wirelessly broadcasting the voice messages from said central transceiver to a set of carry-on transceiver devices.

Hereby, preferably:
- the process data in step a) are obtained at least partially by a set of process measurement systems which are configured to measure and transmit process data regarding one or more process parameters, preferably to a central control system, and/or
- step b), step c) and/or step d) is performed by a central control system;

The method is most preferably implemented and/or executed on a system according to the present invention.

The present invention further concerns the use of voice message generation means, and preferably a text-to-speech module, to convert process alerts obtained on the basis of process data and a pre-defined set of process rules, into a voice message for transmission to an audio input of a central transceiver, preferably at least one of the process alerts comprising variable information, such as variable process data, which preferably include variable parameter values, variable durations and/or timestamps.

In the present invention, the voice messages are generated prior to transmission, allowing the voice message generation means, e.g. the text-to-speech module to be part of the central control system. Hence, when the voice message generation means such as the text-to-speech module, are updated, they only need to be updated once, i.e. in the central control system. This provides a substantial advantage over systems wherein voice message generation means such as the text-to-speech modules, are implemented on the carry-on transceivers, in particular wherein voice message generation means are hardware-implemented on the carry-on transceivers. Furthermore, the set-up of the present invention allows easy implementation of the system for different languages, because this requires an adaptation of the voice message generation means such as the text-to-speech module only, without having to change other parts, components or configurations of the system, and in particular of the central control system, of the present invention.

In an embodiment, the central control system comprises process alert generation means configured to produce said set of process alerts on the basis of said process data and a pre-defined set of process rules. The process alert generation means may hereby comprise a computing system comprising a processing unit, tangible non-volatile memory, and instructions in said memory for controlling said processing unit. In an embodiment, the central control system comprises voice message generation means which comprise a conversion device, the conversion device being adapted for connection to the process alert generation means to receive said process alerts, the conversion device further configured to convert said set of process alerts to one or more voice messages, and the conversion device of the central control system connected to the central transceiver for transmitting said voice messages to an audio input of said central transceiver. The use of a conversion device for the voice message generation allows easy implantation in previously installed central control systems. Basically the conversion device can be configured to be plugged into a previously installed central control system via one of its an output ports which can be configured to transmit the process alerts. The conversion device is preferably connected directly to the central transceiver.

In a preferred embodiment, the text-to-speech module is a software-implemented module and preferably the central control system comprises a processing unit configured with said software-implemented text-to-speech module. Software-implemented modules can be easily upgraded, installed, re-installed, etc. without particular effort or without an expensive hardware-update. Hereby, the text-to-speech module may, in a preferred embodiment, be installed on the conversion device as disclosed here above. Alternatively, the text-to-speech module may be installed on the process alert generation means.

The present invention is very useful for plant monitoring or plant control, wherein the process alerts are selectable from a pre-defined list of process alerts. In such a case, the voice message generation means may for instance be configured to produce a voice message in correspondence with an incoming process alert by looking up an audio signal from a library on the basis of the process alert or a code connected to said process alert. Hence, in such an embodiment, the voice message generation means preferably comprise a database relating each of the possible, pre-defined process alerts with a particular, pre-recorded voice message. Such pre-recorded voice messages may be produced ad hoc, or may be produced via a text-to-speech module.

The present invention is also particularly useful for plant monitoring or plant control, wherein at least one of the set of process alerts comprises variable information, such as variable process data, which may include variable parameter values, variable durations, timestamps, etc. Hence, in a preferred embodiment, at least one of the process alerts comprises variable information, such as variable process data, which may include variable parameter values, variable durations, timestamps, etc. The use of a text-to-speech module allows conversion of basically any type of process alert into a voice message. The process alert may hereby comprise sentences, words, letters, numbers, etc. In particular if the process alert comprises one or more numbers, these can be variables or parameter values which have for instance been measured by the set of measurement systems. The use of a text-to-speech module allows easy and reliable conversion of variables or parameter values within a process alert to voice messages.

Furthermore, the present invention can be very easily implemented in plants having a monitoring and/or control infrastructure such as a SCADA or DCS system, with a central control room in which all process data is collected and a set of process alerts are notified, e.g. on a display, such that control room operators can take the necessary action, including notifying a field operator of the alert via a broadcasting system. To this respect, it is important to note that such a broadcasting system typically has an audio input for audio messages, i.c. voice messages. The audio input of the central transceiver can be an analogue audio input or a digital audio input, but typically at least an analogue audio input is provided at the control room operator side. For instance, the control operator speaks a voice message into a microphone of the central transceiver. Hereby the spoken voice message is typically converted initially to an electrical audio signal, i.c. an electrical voice message, which can then be further processed, e.g. transmitted or first converted, e.g. digitalized. Hereby, the microphone or the central transceiver typically comprises a socket into which an electrical voice message can be put in, preferably the electrical voice message being analogue, but also a digital voice message can be used. In the present invention, the central control system can be connected to the central transceiver via such an input socket for audio signals, i.c. electrical voice messages, thereby again allowing easy incorporation of the present invention in previously installed infrastructure.

In an embodiment of the invention, the voice messages are transmitted in any of the following formats: .3gp, .aa, .aac, .aax, .act, .aiff, .amr, .ape, .au, .awb, .dct, .dss, .dvf, .flac, .gsm, .iklax, .ivs, .m4a, .m4b, .m4p, .mmf, .mp3, .mpc, .msv, .ogg, .oga, .mogg, .opus, .ra, .rm, .raw, .sln, .tta, .vox, .wav, .wma, .wv, .webm, .8svx.

### Description of figures

**Figure 1** illustrates how a system and method in accordance with the present invention can be implemented on a process plant site.
**Figure 2** illustrates an embodiment of the present invention wherein a conversion device is used to convert process alerts to voice messages.

### Detailed description of the invention

The present invention concerns a system and method for automatically informing operators in the field of process alerts as presented above and in the claims and as further described below.

The set of process measurement systems which is configured to transmit process data regarding one or more process parameters to the central control system, may comprise any type of measurement system which is used for measuring parameters of any installation of a process plant. Typical examples of such measurement systems are:
- temperature measurement systems for measuring the temperature within e.g. a reactor barrel or a pipeline wall;
- pressure measurement systems for measuring the pressure within e.g. a reactor barrel or a pipeline;
- filling measurement systems for obtaining the filling level of e.g. a reactor barrel or storage tank;
- flow measurement systems for measuring the flow in e.g. a pipeline;
- fire detector systems;
- smoke detector systems;
- gas detector systems;
- movement detector systems;
- radiation detector systems;
- light detector systems;
- power measurement systems, such as electrical power measurement systems;
- electrical current and electrical voltage measurement systems;
- etc.

Preferably, the system of the present invention comprises a SCADA system which includes at least a subset of said process measurement systems or a DCS system which includes at least a subset of said process measurement systems.

In the present invention, the central control system is configured to produce a set of process alerts on the basis of process data received from the measurement systems, and on the basis of a pre-defined set of process rules. Preferably, the central control system thereto comprises a processing unit, tangible non-volatile memory, and instructions in said memory for controlling said processing unit, said instructions comprising an implementation of the pre-defined set of process rules. Typically, the central control system comprises a computerserver. In an embodiment, the computerserver is configured to:
- receive the process data via an input port;
- produce the set of process alerts on the basis of the process data, in correspondence with the set of process rules which can be software-implemented;
- convert the process alerts to one or more voice messages, preferably using the text-to-speech module, which can be software-implemented; and/or
- send the one or more voice message to an audio output port of the computer server, preferably an analogue audio output port, e.g. a standard auxiliary output port (AUX-out). The audio output port can be connected to the audio input port of the central transceiver, which is configured to wirelessly broadcast said voice messages.

In another embodiment, the computer server is configured to:
- receive the process data via an input port;
- produce the set of process alerts on the basis of the process data, in correspondence with the set of process rules which can be software-implemented;
- transmit the process alerts to a conversion device configured to convert the process alerts to one or more voice messages, preferably using the text-to-speech module, which can be software-implemented on said conversion device,
whereby the conversion device is connected to the central transceiver and configured to transmit the voice messages to said central transceiver for broadcasting.

Further, the central control system, preferably the computerserver of the central control system, may be configured to store a record of received process data, a record of process alerts, and/or a digital record of the voice messages. The central control system, preferably the computerserver of the central control system, can also preferably be connected to other peripherals such as printers, displays, keyboards, mouse, and can preferably be connected to an intranet or the internet, e.g. to allow off-site reporting and/or off-site access.

In a particularly preferred embodiment, the text-to-speech module is a software-implemented text-to-speech module which receives a process alert as input and produces one or more voice messages as output. Preferably the software comprises instructions to:
- divide a process alert in one or more snippets which have a chronological order;
- for each snippet, retrieve from a speech database a voice record corresponding to the snippet;
- send the retrieved voice records to the output in the chronological order of the snippets, optionally by first concatenate at least some of the retrieved voice records in the chronological order of the snippets and subsequently sending the concatenated voice records to the output,
thereby producing one or more voice messages corresponding to the process alert.

In an embodiment, the text-to-speech module is implemented on a computerserver of the central control system which is also configured to produce the set of process alerts. In another embodiment, the text-to-speech module is implanted on a conversion device connected to a computerserver of the central control system which is configured to produce the set of process alerts, the conversion device configured to receive the process alerts and convert each of the process alerts to one or more voice messages.

In the present invention, the communication of the voice message between the central control system (e.g. the conversion device and/or the text-to-speech module of the central control system) and central transceiver is performed by transmission of an electrical audio signal, i.c. an electrical voice message. The electrical audio signal can be an analogue signal or a digital signal. Typically, an analogue audio signal is preferred because this can be more easily implemented on older broadcasting equipment.

Preferably the system of the present invention comprises a wired audio-transmitting connection between central control system and central transceiver for transmission of electrical audio signals, i.c. the voice messages. This allows fast, even substantially instantaneous, and reliable implementation of the present invention in existing audio-transmission systems.

In a preferred embodiment, the central control system comprises a standard auxiliary output port (AUX-out) for sending electrical audio signals and/or the central transceiver comprises a standard auxiliary input port (AUX-in) for receiving electrical audio signals.

An auxiliary port (AUX) is the logical name for a standard communications port. AUX is an asynchronous serial port with an interface that allows the auxiliary input of audio signals (e.g. for MP3 players, headphones, portable music players, amplifiers, speakers, microphones, etc.). It is an interface that permits a device such as a PC, a computerserver or a transceiver to transmit or receive data one bit at a time. For instance, the AUX port on a PC is computer port 1 (COM1), which is the first serial port with a preconfigured assignment for serial devices. An AUX port is typically used for audio equipment that receives peripheral sound sources. The peripheral sound device is connected to an AUX port. An AUX port can be used for input (AUX-in) or output (AUX-out) of audio signals. An auxiliary port is also known as an auxiliary jack or auxiliary input/output. Although there are no set standards specifically for the AUX port, the serial port is standardized by RS-232. The RS-232 standard is also known as EIA 232, EIA RS-232, and as TIA-232-F, issued in 1997. Although most systems have an AUX port, some older models do not. Nonetheless, there are adapters available that allow a sound device to work through an older system. In a preferred embodiment of the present invention, the central control system comprises an AUX-out port which can be connected to the AUX-in port of the central transceiver.

The present invention concerns the communication of voice messages. Voice messages are audio messages comprising speech. In the present invention, the voice messages need to be clearly understandable.

The central transceiver of the present invention is configured to wirelessly transmit the voice messages. Hereby preferably the transmission comprises broadcasting the voice messages. The term "broadcasting" hereby refers to a simultaneous transmission of the message to a set of one or more receiving devices, i.c. the set of carry-on transceiver devices. Preferably, the wireless transmission is performed by wirelessly broadcasting in a radiofrequency (RF) band, preferably using an RF band between 20 kHz to 300 GHz, more preferably between 1 MHz and 10 GHz, still more preferably between 10 MHz and 2 GHz. Particularly preferred RF bands lie between 144 MHz and 148 MHz and between 430 MHz and 450 MHz. For instance, the band between 446.0 and 446.2 MHz can be used. PMR446 (personal mobile radio, 446 MHz) is a part of the UHF radio frequency range that is open without licensing for business and personal use in most countries of the European Union. Other preferred frequency bands are 70-centimeter band (around 440 MHz), KDR 444 (444 MHz to 445 MHz), UHF CB (477 MHz), 27 MHz CB Radio, LPD433 (low power device 433 MHz), around 49 MHz, Family Radio Service (around 462 MHz and around 467 MHz), around 149 MHz, 68-72 MHz, around 43 MHz, around 151 MHz, around 154 MHz, around 138 MH, around 139 MHz, around 143 MHz, around 155 MHz, around 156 MHz, between 30 MHz and 32 MHz, between 409 MHz and 410 MHz, around 350 MHz, between 142 and 143 MHz, between 476 and 477 MHz, between 26 and 28 MHz, between 420 and 423 MHz, between 348 and 349 MHz, between 903 and 905 MHz, around 29 MHz, between 448 and 450 MHz, around 325 MHz, around 78 MHz, around 245 MHz. The specific RF band and/or the channel within such RF band which is being used may depend on local preferences and local legislation. It may also depend on the hardware, i.c. the central transceiver and/or carry-on transceiver devices, which was already part of the infrastructure.

The wireless transmission can preferably be analogous, e.g. using frequency modulation (FM), or can preferably be digital, e. g. using time-division multiple access (TDMA) or frequency division multiple access (FDMA).

The central transceiver can be configured to wirelessly transmit the voice messages in a wireless transmission channel, and is preferably also configured to receive messages in the same transmission channel, i.e. preferably the central transceiver is a bidirectional transceiver device. Similarly, the carry-on transceiver devices, also called "handheld transceivers" (HT), are preferably bidirectional transceiver devices, capable of receiving and transmitting messages in the same transmission channel.

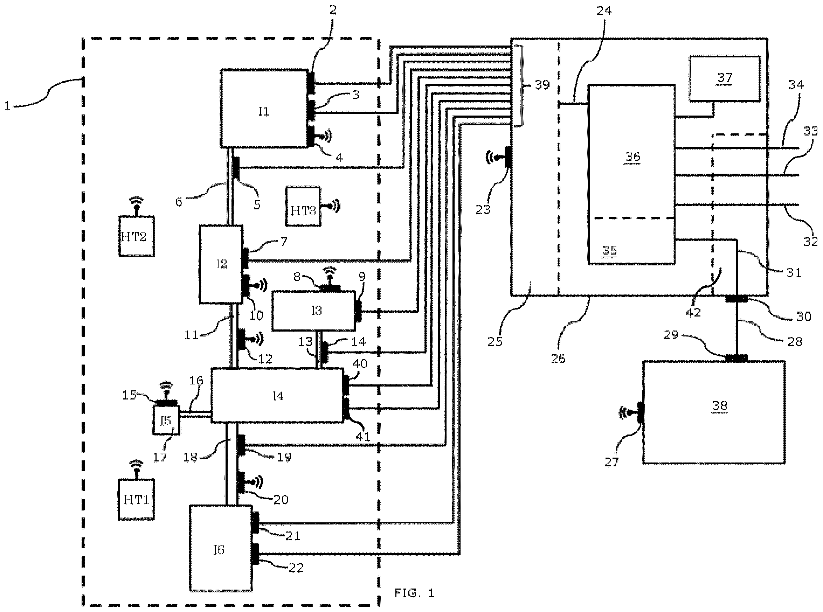

The system of the present invention is illustrated in detail using fig. 1. Herein, a process plant (1) is shown, which comprises a number of interconnected installations (I1, I2, I3, I4, I5, I6), which all need to be monitored and/or controlled. The installations thereto are provided with process measurement systems. Also the connections between the different installations can be provided with process measurement systems. In fig. 1, the arrangement of process measurement systems is illustrated as described here below:
Installation I1 is provided with a process measurement system comprising three measurement modules (2,3,4), each of which can communicate independently with the central control system (26). Two measurement modules (2,3) are wired to the control system (26), whereas one measurement module (4) communicates wirelessly with the control system (26). Each measurement module (2,3,4) can be configured to collect process data regarding the process being performed in installation I1 and/or the status of the installation I1. The measurement modules may comprise or be connected to one or more sensors provided on or in the installation I1, and may further comprise data-acquisition means and/or data-processing means, which may be electric, electromagnetic, electromechanical, mechanical and/or magnetic in nature. The measurement modules (2,3,4) may also be control modules, whereby preferably the connection between the control module and the central control system is bidirectional. For instance, the control module may comprise a regulation system, such as a PID controller with a setpoint, whereby preferably a setpoint of the regulation system may be set by the central control system.

Installation I1 is connected to installation I2 via a connection (6), which may for instance be a set of any or any combination of supply lines, pipelines, power cables, electrical cables, gastubes, vacuum tubes, etc. The connection (6) is also monitored using a process measurement system comprising a measurement module (5) connected by wire to the central control system (26).

Installation I2 is provided with a process measurement system comprising a wired measurement module (7) and a wireless measurement module (10), and is connected with a connection (11) to installation I4, the connection (11) also being monitored with process measurement system (12) which communicates wirelessly with the central control system (26). Likewise, installation I3 is provided with a process measurement system comprising a wired measurement module (9) and a wireless measurement module (8), and is connected with a connection (13) to installation I4, the connection (13) also being monitored with process measurement system (14) which communicates wirelessly with the central control system (26). A further installation I5 (17) is provided with a process measurement system comprising a wireless measurement module (15), and is connected with a connection (16) to installation I4. Installation I4 may be for instance a process reactor, the process and the installation status being monitored by a process measurement system comprising two wired measurement and/or control modules (40, 41). Installation I4 is connected to installation I6 via a connection (18), which itself is monitored and/or controlled with a process measurement system comprising a wired measurement module (19) and a wireless measurement module (20), both communicating with the central control system (26). Installation I6 is provided with a process measurement system comprising two wired measurement and/or control modules (21, 22).

In a preferred embodiment, at least some of the process measurement systems are process control systems, whereby the process data which is measured by the process measurement system and/or any of the other process measurement systems is used either directly or via the central control system, to control the process.

Around the installations (I1-I6) of the process plant (1), three field operators are available for servicing and monitoring. Each of the three field operators is provided with a wireless carry-on transceiver (HT1, HT2, HT3).

The process measurement systems for the installations are in communication with the central control system via wired connections (39) and/or wireless connections (23). Preferably the control system comprises an measurement input module (25), which is configured to receive process data from the process measurement systems or the measurement modules thereof. The measurement input module (25) can also be an input/output module in case of the presence of bidirectional connections with the process measurement systems, e.g. when at least some of the process measurement systems are also control systems for the installations.

In a preferred embodiment, at least some, and preferably all, of the process data is transmitted from the process measurement systems to the central control system substantially instantaneously, more preferably in realtime.

The process data received at the measurement input module (25) of the central control system (26) are available (24) for further processing or analysis to the central control system, preferably to a processing unit (36) of the central control system (26). The processing unit (36) can hereby be configured for producing a set of process alerts on the basis of the process data and on the basis of a pre-defined set of process rules, preferably said process rules being software-implemented. The thus produced set of process alerts are converted into one or more voice messages by a text-to-speech module (35), which can also be software-implemented. These voice message can then be transmitted (31) to an audio output (30), for instance an AUX-out port, which is connected (28) to the audio input (29) of the central transceiver (38), for instance an AUX-in port. The control system can also be configured for other actions. For instance, the central control system (26) may comprise local storage means, such as hard disk, solid state memory, tape recorder, etc., for archiving purposes and/or for future use by the pre-defined set of process rules, e.g. if the latter are based on historical process data or process alerts. The control system may also comprise an I/O module (42) for communication with peripherals (32) such as displays, keyboards, graphical input means (mouse), printers, or with external entities (33, 34), such as intranet or internet, external storage e.g. for backup, a warning system for external alerts (e.g. text messaging or e-mailing via external networks, e.g. telephone networks, GSM/GPRS/3G/4G/5G networks), for upgrading, etc.

The central transceiver (38) is configured to wirelessly broadcast (27) the incoming voice messages to the carry-on devices (HT1, HT2, HT3). The voice message contain information and instructions for the field operators, e.g. indication of the alert, possibly information on the process parameters, and possibly one or more instructions for the field operators. Preferably, the communication between central transceiver and carry-on devices is bidirectional, thereby allowing messages to be broadcasted from a carry-on device which can be received by the central receiver. Messages from carry-on devices to central transceiver may be voice messages and/or may be pre-defined signals. Voice messages can be listened and responded to by a human control room operator who supervises the control room and the central control system. Received voice messages could also be transmitted to central control system, where they could be converted to text messages using a speech-to-text module, to instructions for the control system, or to any other type of message.

In a preferred embodiment, the central transceiver is configured to communicate received messages from the carry-on devices to the central control system, e.g. via an input connection (32,33,34) to the I/O module (42) of the control system. Pre-defined signals received by the central transceiver can be automatically communicated to the control system. Such pre-defined signals have the advantage of being easily interpretable by the control system, as they preferably comprise analogue or digitally encoded signals, the decoding of which can be performed without errors. The signals may comprise pre-defined feedback and/or instructions from the field operator. Examples of such feedback and/or instructions are:
- acknowledgement of receipt
- acknowledgement of receipt, together with identifier of carry-on device
- acknowledgement of receipt and acceptance of the given instructions (i.e. confirmation of instructions)
- acknowledgement of receipt and acceptance of the given instructions, together with identifier of carry-on device
- acknowledgement of receipt and rejection of the given instructions
- acknowledgement of receipt and rejection of the given instructions, together with identifier of carry-on device
- request for repeating last message
- request for repeating penultimate message
- request for repeating antepenultimate message
- request for repeating the last but 'n' message, wherein n is any positive integer value
- request for communication with human control operator
- confirmation of problem
- confirmation of execution of instructions
- confirmation of execution of instructions provided in message 'ID', wherein 'ID' refers to an identifier of a specific message, e.g. a message number or an identifying message code

In a preferred embodiment, the carry-on transceiver devices are configured to wirelessly communicate with the central control system, preferably via a reception antenna (23) of the central control system. In this respect, the carry-on transceiver devices could be deemed part of the process plant or installation which is being monitored, and may thus form part of a SCADA or DCS control system. The carry-on transceiver device may thus be configured to provide process data to the central control system, thereby effectively acting as a temporary or permanent process measurement systems. For instance, specific alerts or signals could be transmitted from the carry-on transceiver devices to the central control system, leading to process alerts in accordance with the pre-defined set of process rules. Examples of possible alerts, signals and/or actions are:
- triggering of alarm, e.g. on the SCADA control system or the DCS system
- controlling alarm horns and/or illumination via the carry-on transceiver devices, i.e. the carry-on transceivers may be configured to send a request for turning on/off an alarm horn and/or illumination
- controlling gates of the plant site, , i.e. the carry-on transceivers may be configured to send a request for opening/closing turning the gates of a process plant site

Preferably, the carry-on transceiver devices comprises a set of pre-programmable buttons, a numeric pad, a touchscreen, an alphanumeric pad, and/or a combination thereof for composing and/or transmitting said pre-defined signals.

In a preferred embodiment, at least one, and preferably all, of the carry-on transceiver devices comprises a locator module for obtaining the location of said carry-on transceiver, preferably whereby the carry-on transceiver device is configured to regularly transmit its location, whereby the central control system is configured to receive the location of the carry-on transceiver device. In an embodiment, the carry-on transceiver is configured to transmit its location to the central control system or to the central transceiver, which central transceiver is preferably configured to transmit the location of the carry-on transceiver to the central control system, e.g. via an external communication line (32, 33, 34). The locator module may preferably comprise a Global Positioning System (GPS) module. Knowledge by the central control system of the current location of the carry-on transceiver devices (HT1, HT2, HT3), allows to use to compose personalized process alerts, i.e. the pre-defined set of process rules may comprise instructions to identify the primary carry-on transceiver devices, i.e. the carry-on device or devices which are expected to react to the process alert and corresponding voice message. Typically this is the carry-on transceiver device which is closest to the scene.

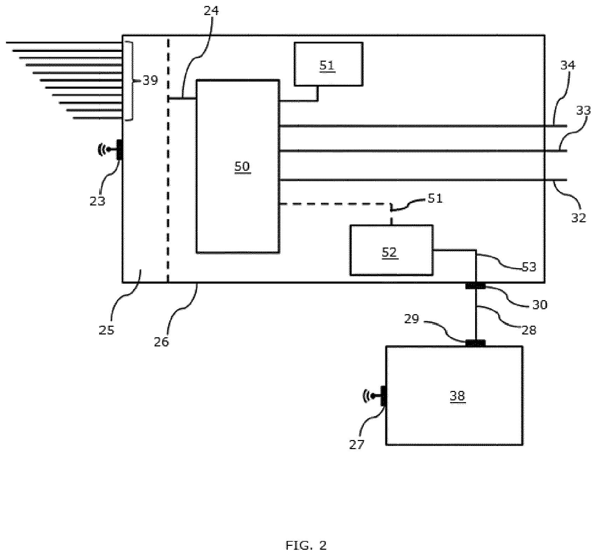

Figure 2 illustrates an embodiment of the present invention, which slightly differs from the embodiment shown in fig. 1, with respect to the conversion of process alerts into voice messages. Fig. 2 also shows a central control system (26), comprising a measurement input module (25) which is connected to the process measurement systems via wired connections (39) or wirelessly (23). The signals from and optionally to the process measurement systems can be transmitted (24) to or from a processing unit (50) which is configured to produce a set of process alerts in accordance with the present invention. The processing unit (50) can be connected (51) with a conversion device (52), which is configured to receive process alerts which are transmitted via the connection (51) from the processing unit (50), and to convert each of said received process alerts into one or more voice messages. The conversion device is connected (53) or comprises an audio output port (30), and is further configured to transmit (28) the voice messages via said output port (30) to the audio input (29) of the central transceiver (38).

### Examples

### Example 1: Chemical process

One particular type of process plant which can be implemented with the system and method of the present invention is a chemical process plant, wherein possibly hazardous substances are used or produced, thus requiring correct and errorfree monitoring of the process parameters.

Referencing to fig. 1, installation I1 and I3 may for instance be storage tanks for two different reagents in liquid form which need to react in a continuous gas-liquid reaction in reactor barrel I4. The storage tanks I1 and I3 may require monitoring as to filling level, atmospheric conditions, presence of smoke/fire, etc. also the atmospheric conditions in the reactor barrel I4 may require monitoring via a process measurement system. The reagent stored in liquid form in I1 first needs to be vaporized in I2 and is then injected into reactor barrel I4 together with the reagent from I3 in liquid form. The temperature in I4 is regulated by a dedicated installation I5, e.g. via a heat exchanger. Monitoring and control of the temperature and heat exchange can be done by the process measurement systems of I5 and I4. The reaction product is extracted via a pipeline (18) and is collected in storage tank I6, which also may require monitoring via a process measurement system. Transfer of the liquids and gasses via pipelines, supply lines or tubing, or power transmission lines (see (6,11,13,16,18) in fig. 1), also typically require monitoring and/or control via process measurement systems (5,12,14,19,20).

The filling level of storage tank I1 can be measured by measurement module 2 and can be communicated to the control system 26 every 10 seconds. Environmental parameters (pressure, temperature, ...) can be measured by measurement module 3 and can be communicated to the control system 26 in realtime. Other parameters, e.g. the status of valves, the degree of oxidation of the tank or tank components, fire/smoke indicators, etc., may be measured by measurement module 4 and communicated wirelessly to the central control system where it is received via a reception antenna (23). Should for instance the filling level of the reagent in I1 drop to 11.2%, which is below a certain critical value (e.g. 12.5%, which could be a pre-set value, or a value depending on other process data, such as the average outflow of reaction product in the past 5 minutes which can be obtained from process data obtained from measurement module 19), the control system will convert the received process data in accordance with the pre-defined set of process rules into a process alert such as "Reagent level in storage tank I1 has dropped to 11.2%, which is smaller than the required 12.5%. Check supply." This process alert is then converted using the text-to-speech module (35) to a voice message. Hereby, the text-to-speech module is capable of correctly converting the variable numbers "11.2" and "12.5" into speech. The voice message is transmitted over a cable connecting the audio output port (30) of the central control system to the an audio input port (29) of the central transceiver (38), e.g. the microphone input jack of a Kenwood NXR-5700E Nexedge® VHF Digital/Analogue Repeater/Base Station. The central transceiver then broadcasts the voice message over a pre-set radio-channel, e.g. using a PMR446 radio frequency such as at 446.10625 MHz with a 12.5 kHz bandwidth.

Note that in the embodiment shown in fig. 1, the text-to-speech module (35) could be replaced by voice message generating means configured to convert the process alerts in one or more voice messages. For instance, and preferably in case the process alerts produced by the processing unit (36) belong to a pre-defined list of process alerts, the voice message generation means may for instance be configured to produce a voice message in correspondence with an incoming process alert by looking up an audio signal from a library on the basis of the process alert or a code connected to said process alert. Hence, in such an embodiment, the voice message generation means preferably comprise a database, optionally stored on storage means (37), relating each of the possible, pre-defined process alerts with a particular, pre-recorded voice message. Such pre-recorded voice messages may be produced ad hoc, or may be produced via a text-to-speech module.

The field operator holding carry-on transceiver device HT3, for instance a Kenwood NX-3220E Portable Radio, is close to storage tank I1, and presses a preprogrammed button on HT3 to confirm receipt of instructions and indicating that he will respond to the instructions. After checking the storage tank and identifying the problem, he may communicate with the control room operator for reporting and/or further instructions, using the same broadcasting system, i.e. same carry-on transceiver device and same central transceiver as the system of the present invention.

## Claims

1. System for automatically informing operators in the field of process alerts, comprising:
- a set of process measurement systems;
- a central control system, and
- a wireless broadcast system comprising a central transceiver and a number of carry-on transceiver devices,
wherein the set of process measurement systems is configured to transmit process data regarding one or more process parameters to the central control system,
wherein the central control system is configured to produce a set of process alerts on the basis of said process data and a pre-defined set of process rules,
**characterized in that** the central control system comprises voice message generation means, preferably a text-to-speech module, for converting said set of process alerts to one or more voice messages,
wherein the central control system is connected to the central transceiver and is configured to transmit said voice messages to an audio input of said central transceiver,
wherein the central transceiver is configured to wirelessly broadcast said voice messages to said set of carry-on transceiver devices.

2. System according to claim 1, wherein the audio input of the central transceiver is an analogue input.

3. System according to claims 1 or 2, wherein the central control system comprises a text-to-speech module, which preferably is a software-implemented module, preferably whereby the central control system comprises a processing unit configured with said software-implemented text-to-speech module.

4. System according to any of the previous claims, comprising a SCADA system which includes at least a subset of said process measurement systems or a DCS system which includes at least a subset of said process measurement systems.

5. System according to any of the previous claims, wherein at least one, and preferably all, of the carry-on transceiver devices comprises a locator module for obtaining the location of said carry-on transceiver, preferably whereby the carry-on transceiver device is configured to regularly transmit its location.

6. System according to any of the previous claims, wherein the central control system comprises a processing unit, tangible non-volatile memory, and instructions in said memory for controlling said processing unit, said instructions comprising an implementation of the pre-defined set of process rules.

7. System according to any of the previous claims, wherein the central control system comprises a conversion device configured to receive process alerts and configured to convert each of said process alerts to on ore more voice messages, preferably using a text-to-speech module, the conversion device preferably being connected to the central transceiver and configured to transmit said voice messages to the audio input of said central transceiver.

8. System according to any of the previous claims, wherein the central transceiver is a bidirectional transceiver device and/or wherein the carry-on transceiver devices bidirectional transceiver devices.

9. Method for automatically informing operators in the field of process alerts, comprising the steps of:
a) obtaining process data regarding one or more process parameters;
b) producing a set of process alerts on the basis of said process data and a pre-defined set of process rules;
c) converting said set of process alerts to one or more voice messages, preferably using a text-to-speech module;
d) transmitting said voice messages to an audio input of a central transceiver, and
e) wirelessly broadcasting the voice messages from said central transceiver to a set of carry-on transceiver devices.

10. Method according to claim 9, wherein the voice messages are transmitted to the audio input of the central transceiver as an analogue electrical audio signal.

11. Method according to claim 9 or 10, wherein
- the process data in step a) are obtained at least partially by a set of process measurement systems which are configured to measure and transmit process data regarding one or more process parameters, preferably to a central control system, and/or
- step b), step c) and/or step d) is performed by a central control system.

12. Method according to any of the claims 9 to 11, the method being implemented and/or executed on a system according to any of the claims 1 to 8.

13. Method according to any of the claims 9 to 12, wherein at least one of the process alerts comprises variable information, such as variable process data, which preferably include variable parameter values, variable durations and/or timestamps.

14. Method according to any of the claims 9 to 13, wherein the wireless broadcasting in step j) is performed in a radiofrequency (RF) band, preferably an RF band between 20 kHz to 300 GHz, more preferably between 1 MHz and 10 GHz, still more preferably between 10 MHz and 2 GHz.

15. Use of a text-to-speech module to convert process alerts obtained on the basis of process data and a pre-defined set of process rules, into a voice message for transmission to an audio input of a central transceiver, preferably at least one of the process alerts comprising variable information, such as variable process data, which preferably include variable parameter values, variable durations and/or timestamps.
